# EUROPEAN PATENT APPLICATION

(11) **EP 3 889 451 A1**
(43) Date of publication of application: **06.10.2021**
(21) Application number: 19891523.3
(22) Date of filing: 19.11.2019
(51) Int. Cl.: F16B 47/00

(54) **SUCTION-ATTRACTION DEVICE AND SUCTION DISK**

(30) Priority: 30.11.2018 JP 2018225979
(71) Applicant: Nippon Paint Holdings Co., Ltd., Osaka-shi, Osaka 531-8511 (JP)
(72) Inventor: SAKAMOTO Hiroyuki, Tokyo 140-8675 (JP)
(74) Representative: Scott, Stephen John
(86) International application number: PCT/JP2019/045314
(87) International publication number: WO 2020/110836

(57) **Abstract**

Provided is a suction device and a suction disc capable of obtaining suction force that can control generation or disappearance of suction force through formation or disappearance of magnetic field. A suction device(1A) has a suction disc (10) formed of an elastomer that is deformable by magnetic force, a support portion (20) configured to support the suction disc (10) such that the suction disc can be deformed and a suction disc deforming element (30) configured to deform the elastomer by magnetic force.

## Description

### CROSS-REFERENCE TO RELATED APPLICATION

This application claims priority to and benefit of Japanese Patent Application No. 2018-225979 filed on November 30, 2018, the entire contents of which are incorporated herein by reference.

### TECHNICAL FIELD

The present invention relates to suction devices and suction discs.

### BACKGROUND

A prior art suction disc is known, that generates suction force by negative pressure (airtight effect), a suction disc whose inside or outside is attached with a permanent magnet (see, for example, Patent Literature (PTL) 1). As long as a surface of an object to be sucked is a magnetic absorber, this suction disc, improves suction force of the suction disc, which tends to decline over time, by magnetic force (attracting magnetic force).

### CITATION LIST

### Patent Literature

PTL 1: JPS6230016 (U)

### SUMMARY

### (Technical Problem)

However, the above described known suction disc utilizes the magnetic force to compensate the suction force based on negative pressure between the suction disc and the object to be sucked generated by deforming the suction disc with respect to the object to be sucked in a compressive manner as long as the surface to be sucked is a magnetic absorber. Thus, the prior art suction device does not offer any advantageous effect to compensate the suction force on an object whose surface to be sucked is not a magnetic absorber, compared to any normal suction disc having no permanent magnets.

It is therefore an object of the present invention is to provide a suction device and a suction disc capable of obtaining high suction force on an object to be sucked regardless of whether the object to be sucked is a magnetic absorber. Another object of the present invention is to provide a suction device and a suction disc capable of controlling suction and detachment of the suction disc by generating, disappearing, enhancing or declining an effect by magnetic force (or magnetic field).

### (Solution to Problem)

In this specification, terms are defined as follows.

The "soft magnetic body" means "an object or a substance having a property which allows the object or substance subjected to external magnetic force (or magnetic field) to respond to the external magnetic force (or magnetic field) but not to generate any magnetic force (or magnetic field) by itself ." Furthermore, the "soft magnetic elastomer" means "an elastomer belonging to a group of soft magnetic bodies."

" The "hard magnetic body" is a so-called magnet, and means "an object or a substance having a property which allows the object or substance to have a large coercive force and a spontaneous magnetization, and to generate magnetic force (or magnetic field) by itself." The "hard magnetic elastomer" means "an elastomer belonging to a group of hard magnetic bodies."

The suction device according to the present invention comprises a suction disc having a portion formed of an elastomer that is deformable by magnetic force, a support portion configured to support the suction disc such that the suction disc can be deformed, and a suction disc deforming element configured to deform the elastomer by magnetic force.

According to the suction device of the present invention, deformation of the elastomer by magnetic force causes a differential pressure between atmospheric pressure and inner pressure in a space between the suction device and the object to be sucked to generate suction force. That is, according to the suction device of the present invention, suction force that can be controlled by presence/absence or magnitude of magnetic field can be obtained. Specifically, the suction force is high when effect of the magnetic field is strong; the suction force decreases or disappears when the effect of the magnetic field is weak so that the elastic restoring force of the elastomer exceeds the effect; and the suction force disappears when the magnetic field disappears.

In the suction device according to the present invention, the elastomer can be a soft magnetic elastomer, and the suction disc deforming element can be a hard magnetic body. In this case, combination of the soft magnetic elastomer and the hard magnetic body enables one to control suction force by magnetic field. Specifically, the suction force is generated by negative pressure while the magnetic field by the hard magnetic body acts on the soft magnetic elastomer, and the hard magnetic body and the soft magnetic elastomer are attracted to each other, on the other hand, negative pressure is not generated and thus the suction force disappears when the effect of magnetic field of the hard magnetic body on the soft magnetic elastomer is not enough so that the elastic restoring force of the soft magnetic elastomer exceeds the effect or the magnetic field disappears.

In the suction device according to the present invention, the elastomer can be a hard magnetic elastomer, and the suction disc deforming element can be a hard magnetic body. In this case, combination of the hard magnetic elastomer and the hard magnetic body enables one to control the suction force by magnetic field. Specifically, the suction force is generated by negative pressure while the hard magnetic elastomer and the hard magnetic body are attracted to each other due to the effect of the magnetic field, on the other hand, negative pressure is not generated while the hard magnetic elastomer and the hard magnetic body repel each other due to the effect of the magnetic field, then the suction force disappears.

In the suction device according to the present invention, the hard magnetic body can be an electromagnet. In this case, the suction force of the suction disc can be easily controlled by a current applied to the electromagnet, and suction or detachment of the suction disc with respect to the object to be sucked can be easily controlled in a highly responsive manner.

In the suction device according to the present invention, the elastomer can be a hard magnetic elastomer, and the suction disc deforming element can be a soft magnetic body. In this case, combination of the hard magnetic elastomer and the soft magnetic body enables one to control suction force by magnetic field. Specifically, the suction force is generated by negative pressure while the hard magnetic elastomer and the soft magnetic body are attracted to each other due to the effect of magnetic field, on the other hand, negative pressure is not generated while the effect of the magnetic field is not enough, then suction force disappears.

In the suction device according to the present invention, the suction disc deforming element can be displaceable relative to the suction disc. In this case, the suction force of the suction disc can be controlled without adjusting the suction disc deforming element itself.

In the suction device according to the present invention, the suction disc may be planar and have a protrusion or recess on the sucking surface of the suction disc. In this case, the elastomer is more likely to deform with smaller magnetic force, and negative pressure due to a differential pressure between inner pressure in a space between the suction device and the object to be sucked and atmospheric pressure is more likely to be generated. In this manner, the suction force that can be controlled by the presence/absence or the magnitude of the magnetic field can be obtained effectively.

In the suction device according to the present invention, it is preferable that the support portion annularly supports the suction disc in a plan view. In this case, since a sucking surface is formed in a closed region, negative pressure due to a differential pressure between inner pressure in a space between the suction device and the object to be sucked and atmospheric pressure is more likely to be generated. In this manner, a decline in the suction force over time can be suppressed more effectively.

In the suction device according to the present invention, preferably, the support portion has an opening that allows a space formed between the support portion and the suction disc to be led to the outside. In this case, the suction disc can be easily deformed and restored, which facilitates suction to and detachment from the surface to be sucked. As a result, response to the suction and detachment is improved.

The suction disc according to the present invention has a portion formed of an elastomer that is deformable by magnetic force, is planar, and has a protrusion or recess on the sucking surface. According to the suction disc of the present invention, elastomer is likely to be deformed with small magnetic force, and negative pressure due to a differential pressure between inner pressure in a space between the suction disc and the object to be sucked and atmospheric pressure is more likely to be generated. As a result, a decline of suction force over time is suppressed, and highly sustainable suction force can be obtained.

### (Advantageous Effect)

According to the present invention, negative pressure due to a differential pressure between inner pressure in a space between the suction device and the object to be sucked and atmospheric pressure is likely to be generated. Thus the suction force that can be controlled by the presence/absence or the magnitude of magnetic field can be obtained, and the suction device and the suction disc that can easily control suction to and detachment from the object to be sucked can be provided.

### BRIEF DESCRIPTION OF THE DRAWINGS

In the accompanying drawings:
FIG. 1 is a perspective view schematically illustrating a suction device according to a first embodiment of the present invention, viewed from a support portion of the suction device;
FIG. 2 is an exploded perspective view schematically illustrating the suction device in FIG. 1, viewed from a sucking surface of the suction device;
FIG. 3 is a side view schematically illustrating the suction device in FIG. 1;
FIG. 4A is a partial cross-sectional view schematically illustrating a state before the suction device in FIG. 1 is sucked to an object to be sucked, viewed from a side of the suction device;
FIG. 4B is a partial cross-sectional view schematically illustrating a state after the suction device in FIG. 1 is sucked to the object to be sucked, viewed from a side of the suction device;
FIG. 5 is a side view schematically illustrating a variation in which a suction disc deforming element of the suction device in FIG. 1 is relatively moved;
FIG. 6A is a partial cross-sectional view schematically illustrating a state before a suction device according to a second embodiment of the present invention is sucked to an object to be sucked, viewed from a side of the suction device;
FIG. 6B is a partial cross-sectional view schematically illustrating a state after the suction device in FIG. 6A is sucked to the object to be sucked, viewed from a side of the suction device;
FIG. 7A is a side view schematically illustrating the suction disc according to an embodiment of the present invention;
FIG. 7B is a bottom view schematically illustrating the suction disc in FIG. 7A;
FIG. 8A is a partial cross-sectional view schematically illustrating a state before the suction disc in FIG. 7A is sucked to the object to be sucked and a state right after a projection of the suction disc is brought in contact with the object to be sucked, viewed from a side of the suction disc;
FIG. 8B is a partial cross-sectional view schematically illustrating a state before the suction disc in FIG. 7A is sucked to the object to be sucked and a state in which the whole suction disc is brought in contact with the object to be sucked, viewed from a side of the suction disc;
FIG. 8C is a partial cross-sectional view schematically illustrating a state in which the suction disc in FIG. 7A is sucked to the object to be sucked, viewed from a side of the suction disc;
FIG. 9A is a top perspective view schematically illustrating an example of a support portion applicable to the suction device according to the present invention;
FIG. 9B is a top perspective view schematically illustrating another example of a support portion applicable to the suction device according to the present invention;
FIG. 10A is a plan view schematically illustrating an example of an external shape of the support portion applicable to the suction device according to the present invention; and
FIG. 10B is a plan view schematically illustrating another example of an external shape of the support portion applicable to the suction device according to the present invention;

### DETAILED DESCRIPTION

Suction devices according to some embodiments of the present invention and a suction disc according to an embodiment of the present invention will be described below with reference to the drawings.

### [Suction device]

### <Suction device according to the first embodiment>

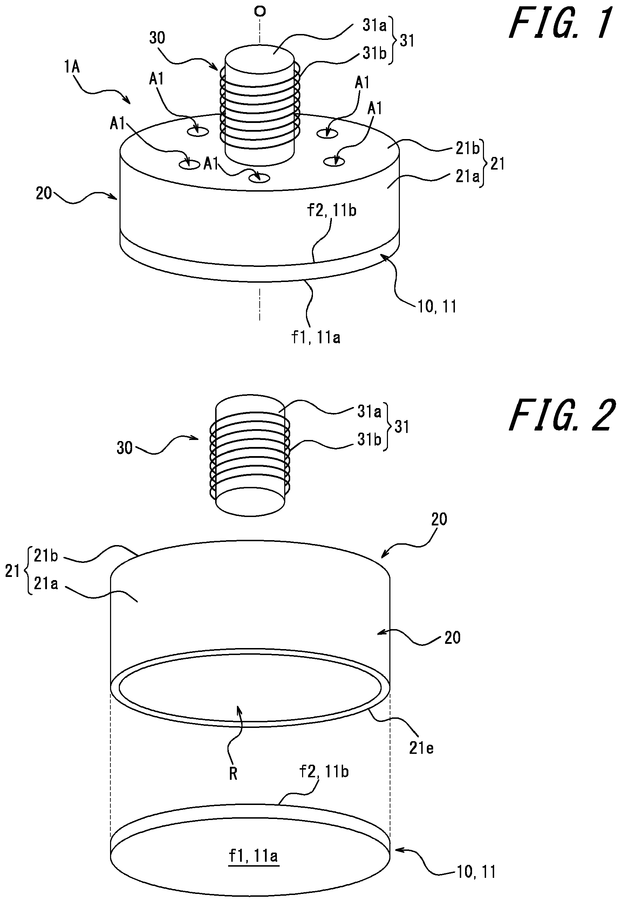

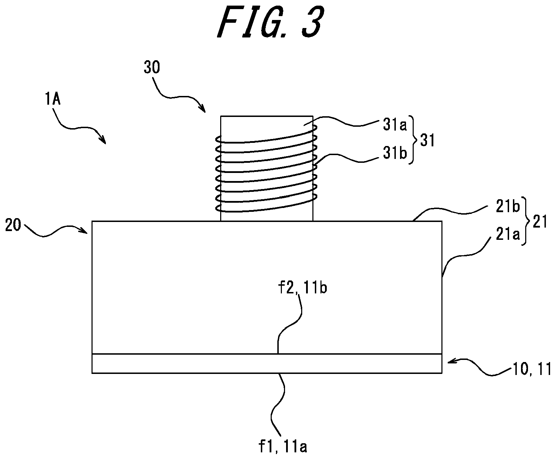

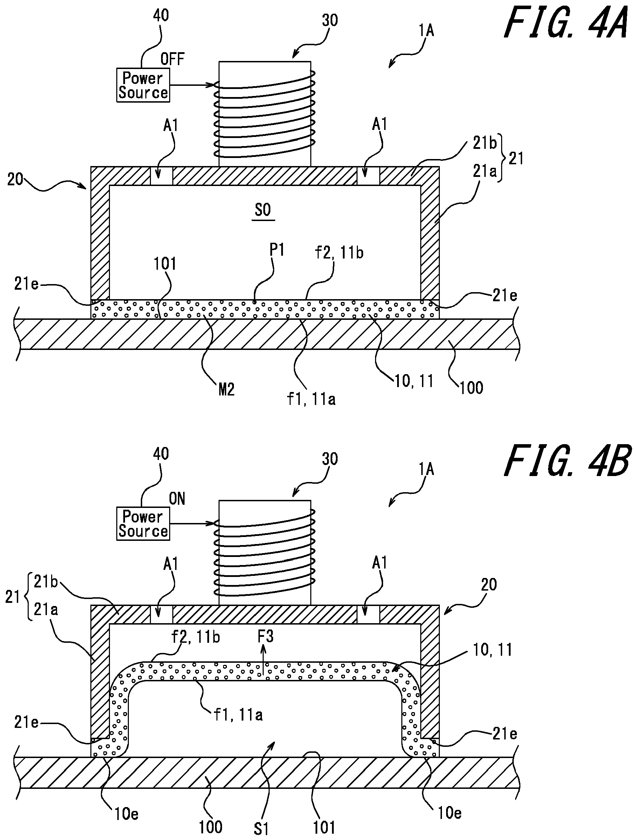

FIG. 1 is a perspective view schematically illustrating a suction device 1A according to the first embodiment of the present invention, viewed from a support portion of the suction device 1A. Further, FIG. 2 is an exploded perspective view schematically illustrating the suction device 1A, viewed from a sucking surface of the suction device 1A. Further, FIG. 3 is a side view schematically illustrating the suction device 1A. FIGS. 4A and 4B respectively illustrate a state in which the suction device 1A is sucked to the object to be sucked 100, on a time-series basis.

In FIG. 1, 1A is a suction device according to the first embodiment of the present invention. The suction device 1A includes a suction disc 10 having a portion formed of an elastomer that is deformable by magnetic force, a support portion 20 configured to support the suction disc 10 such that the suction disc 10 can be deformed, and a suction disc deforming element 30 configured to deform the elastomer by the magnetic force.

### <Suction disc>

As illustrated in FIG. 2, in the suction device 1A according to this embodiment, the suction disc 10 is a disc member 11. The disc member 11 has an external surface 11a and an internal surface 11b. In this embodiment, as illustrated in FIG. 3, the external surface 11a of the disc member 11 is a flat surface. Further, in this embodiment, as illustrated in FIG. 4A, the internal surface 11b of the disc member 11 is also a flat surface. In this embodiment, the external surface 11a of the disc member 11 forms a sucking surface f1 of the suction disc 10. Further, in this embodiment, the internal surface 11b of the disc member 11 forms an attracting surface f2 of the suction disc 10.

At least a part of the disc member 11 not in contact with the support portion 20 is formed of a soft magnetic elastomer that is deformable by magnetic force. In the suction device 1A according to this embodiment, the disc member 11 is formed of the soft magnetic elastomer that is deformable by the magnetic force. The soft magnetic elastomer has a property of responding when it receives the magnetic force (or magnetic field) but of not generating the magnetic force (or magnetic field) by itself unless it receives magnetic field from outside. Specific examples of the soft magnetic elastomer include silicon elastomer containing iron powder. Further, examples of the soft magnetic elastomer include those containing soft magnetic particles P1 and a dispersion medium M1.

### (Soft magnetic particle)

The soft magnetic particle P1 is a particle having soft magnetism. Examples of the soft magnetic body forming the soft magnetic particle P1 include, for example, metals such as iron, nickel and cobalt, metal oxides thereof, alloys containing the above-mentioned metals, and metal oxides of the above-mentioned alloys. The soft magnetic elastomer contains soft magnetic particles P1. The soft magnetic particles P1 contained in the soft magnetic elastomer may be the same kind of soft magnetic body or two or more different kinds of soft magnetic bodies. Further, the size of the soft magnetic particles P1 can be selected as appropriate according to the shape and the size of the suction disc 10, properties of dispersion medium M1, elastic force required for the suction disc 10, suction force (required negative pressure) required for the suction disc 10, etc. The average particle size of the soft magnetic particle P1 contained in the soft magnetic elastomer may be the same or different. The average particle size of the soft magnetic particles P1 is, for example, an average particle size in the range of 0.03 to 50 µm, preferably 0.1 to 10 µm. When the average particle size of the soft magnetic particle P1 exceeds 50 µm, it is less likely that a uniform elastomer is obtained. Further, when the average particle size of the soft magnetic particles P1 is less than 0.03 µm, it is less likely that a sufficient deformation of the elastomer by the magnetic field is obtained. In the present invention, the average particle size means the median value (median size) of the particle size distribution. The average particle size is measured by using a laser diffraction type particle size distribution measuring device, a scanning electron microscope (SEM), or the like.

### (Dispersion medium)

The dispersion medium M1 is a medium in which the soft magnetic particles P1 are dispersed. Examples of the dispersion medium M1 include those in which the soft magnetic particles P1 are dispersed and gelled. Examples of such dispersion medium include those containing silicon resin, urethane resin, fluororesin, acrylic resin, polyester resin, urea resin and the like. These resins may be combined for use. The dispersion medium M1 can be selected as appropriate according to the shape and the size of the suction disc 10, the properties of the soft magnetic particle P1, the elastic force required for the suction disc 10, the suction force (required negative pressure) required for the suction disc 10, or the like. Furthermore, the proportion of the soft magnetic particle P1 to the dispersion medium M1 (concentration of the soft magnetic particle PI) can also be selected as appropriate according to the shape and the size of the suction disc 10, the properties of the soft magnetic particle P1, the elastic force required for the suction disc 10, the suction force (required negative pressure) required for the suction disc 10, or the like. The concentration of the soft magnetic particle P1 is, for example, in the range of 35 to 95% by weight, preferably in the range of 40 to 80% by weight, to the total weight of the soft magnetic body. When the concentration of the soft magnetic particle P1 exceeds 95% by weight, it is less likely that the soft magnetic particle P1 is uniformly dispersed in the dispersion medium M1 or that the restoring force of the suction disc is obtained. Further, when the concentration of the soft magnetic particle P1 is less than 35% by weight, it is less likely that deformation of elastomer in the presence of a magnetic field is sufficiently obtained.

### (Support portion)

In the suction device 1A according to this embodiment, the support portion 20 annularly supports the suction disc 10 in a plan view. Further, according to FIGS. 1 and 2, it is obvious that the support portion 20 annularly supports the suction disc 10 in a plan view. As illustrated in FIGS. 1 and 2, in this embodiment, the support portion 20 is a cylindrical member 21 with one end closed. Specifically, the cylindrical member 21 has a cylindrical side wall 21a. In this embodiment, the side wall 21a of the cylindrical member 21 forms a side wall of the support portion 20. As illustrated in FIG. 2, in this embodiment, the side wall 21a of the cylindrical member 21 has a cylindrical shape. That is, the open end 21e of the side wall 21a of the cylindrical member 21 is formed in an annular shape. In this embodiment, the open end 21e of the side wall 21a of the cylindrical member 21 forms the open end of the side wall of the support portion 20 (hereinafter, also referred to as "the side wall open end 21e of the support portion 20"). In this manner, an annularly closed region R is formed inside the side wall open end 21e of the support portion 20. In this embodiment, the attracting surface f2 of the suction disc 10 is fixed to the side wall open end 21e over the entire circumference along the side wall open end 21e of the support portion 20. In this manner, a space S0 having a cross-sectional area of the region R is formed between the suction disc 10 and the support portion 20. It is to be noted that the attracting surface f2 of the suction disc 10 can be fixed by, for example, adhesion or welding.

Further, as illustrated in FIG. 4A, in the suction device 1A according to this embodiment, the support portion 20 has an opening A1 that allows the space S0 formed with the suction disc 10 to be led to the outside. In this embodiment, the cylindrical member 21 has a partition wall 21b that closes one open end of the side wall 21a. In this embodiment, the space S0 is led to the outside by forming a plurality of opening A1s in the partition wall 21b. As illustrated in FIG. 1, in this embodiment, a plurality of opening A1s are formed at intervals around the central axis O of the suction device 1A. However, there can be at least one opening A1. Furthermore, the opening A1 may be omitted from the support portion 20, and the space S0 can be provided as a sealed space.

Furthermore, the support portion 20 is preferably a non-magnetic body. Here, the "non-magnetic" refers to a property that does not respond to "magnetic force (or magnetic field)" when receiving it and does not generate magnetic force (or magnetic field) by itself. Examples of the non-magnetic body include metals such as copper, gold, silver, zinc and lead, and non-metals such as resin, glass, ceramics and wood. In this embodiment, the cylindrical member 21 is a non-magnetic body.

In the suction device 1A according to this embodiment, the suction disc deforming element 30 is a hard magnetic body. The hard magnetic body is a so-called magnet, has large coercivity, spontaneous magnetization, and a property of generating magnetic force (or magnetic field) by itself. Examples of the hard magnetic body are magnets of metals such as iron, nickel and cobalt, metal oxides thereof, alloys containing the above-mentioned metals, and metal oxides of the above-mentioned alloys, and electromagnets. In this embodiment, the hard magnetic body is an electromagnet 31. The electromagnet 31 consists of a magnetic element (core material) 31a wound with an energizing coil 31b. In this embodiment, the electromagnet 31 has a power source 40 (see FIG. 4A) that energizes the energizing coil 31b. The electromagnet 31 can control the magnetic force F3 generated by the electromagnet 31 by turning the power source 40 on and off.

### (Basic operation of the suction device 1A)

Next, the basic operation for fixing the suction device 1A to the object to be sucked 100 according to this embodiment will be described with reference to FIGS. 4A and 4B. In this embodiment, materials of the object to be sucked 100 are not limited to metal, resin, wood, stone, and the like. The object to be sucked 100 can be, for example, a glass plate.

In the suction device 1A according to this embodiment, the electromagnet 31 generates the magnetic force F3 to the suction disc 10 by supplying a current to the energizing coil 31b when the power source 40 is turned on, and. Specifically, when the power source 40 is turned on, the electromagnet 31 generates the magnetic force F3 from the north pole to the south pole or from the south pole to the north pole onto the attracting surface f2 of the suction disc 10. Further, when the power source 40 is turned off, the electromagnet 31 extinguishes the magnetic force F3 by stopping supplying a current to the energizing coil 31b. In this embodiment, when the power source 40 is turned on, the suction disc 10 is deformed toward the magnetic element 31a of the electromagnet 31 (the side of the space S0 of the support portion 20) by the magnetic force F3 generated by the electromagnet 31. Further, in this embodiment, the suction disc 10 is restored to a flat plate shape by disappearance of the magnetic force F3 generated by the electromagnet 31 when the power source 40 is turned off.

### Sucking operation

As illustrated in FIG. 4A, the suction device 1A according to this embodiment, first, brings the sucking surface f1 of the suction disc 10 in contact with the surface to be sucked 101 of the object to be sucked 100 with the power source 40 turned off. Next, when the power source 40 is turned on, as illustrated in FIG. 4B, in the suction disc 10, the region R defined by the side wall open end 21e of the support portion 20 deforms toward the inside of the support portion 20 by the magnetic force F3 generated by the electromagnet 31. At this time, a sealed space S1 in a negative pressure state defined by the side wall open end 21e of the support portion 20 is formed between the suction disc 10 and the object to be sucked 100. In this manner, the suction disc 10 is sucked to the object to be sucked 100 by the differential pressure (suction force) between the sucking surface f1 and the atmospheric pressure acting on the entire suction disc mechanism.

### Detaching operation

In the detaching operation, contrary to the sucking operation, the power source 40 is turned off in the state illustrated in FIG. 4B. Then, the magnetic force F3 generated by the electromagnet 31 disappears, and as a result the suction disc 10 is restored to the flat plate state as illustrated in FIG. 4A. In this manner, differential pressure (suction force) between the sucking surface f1 and the attracting surface f2 is dissolved, and as a result the suction disc 10 can be detached from the object to be sucked 100.

According to the existing suction disc, the suction disc is pushed against the object to be sucked 100, and then is compressed and deformed. As a result, negative pressure is generated between the existing suction disc and the object to be sucked 100, and suction force is generated by the negative pressure. However, in this case, suction force generated by the negative pressure cannot withstand the elastic restoring force of the suction disc material, and declines over time. Further, in the existing suction disc, when strong suction force is exerted, it is necessary to exert force stronger than the suction force to detach the suction disc.

On the other hand, according to the suction device 1A of this embodiment, after the sucking surface f1 of the suction disc 10 is brought in contact with the surface to be sucked 101 of the object to be sucked 100, the suction disc 10 can be pulled and deformed away from the object to be sucked 100 by the magnetic force F3 generated by the electromagnet 31. In this embodiment, the suction disc 10 is deformed from the center of the suction disc 10, with the annular portion 10e fixed to the side wall open end 21e of the support portion 20 as a starting point. In this manner, according to this embodiment, negative pressure is generated between the suction disc 10 and the object to be sucked 100, and suction force is generated by the negative pressure. In this case, while the suction disc deforming element 30 generates the magnetic force F3, a decline in the suction force generated by negative pressure over time is suppressed. Further, according to the suction device 1A of this embodiment, even if strong suction force is exerted, the suction disc can be detached easily by damping or extinguishing the magnetic force F3.

Therefore, according to the suction device 1A of this embodiment, when the elastomer is deformed by the magnetic force, suction force is generated by negative pressure due to the differential pressure between the inner pressure in the space between the suction device and the object to be sucked and the atmospheric pressure. That is, according to the suction device of the present invention, high suction force that can be controlled by the change (strength) of the effect of the magnetic field can be obtained, in which, high suction force is exerted when effect of the magnetic field is strong enough, suction force decreases or disappears when the effect of the magnetic field is weak so that the elastic restoring force of the elastomer exceeds the effect, or the suction force disappears when the magnetic field disappears.

Further, when the suction disc 10 is a soft magnetic elastomer as with the suction device 1A according to this embodiment, the suction disc deforming element 30 that deforms the suction disc 10 can be a hard magnetic body. In this case, combination of the soft magnetic elastomer and a hard magnetic body allows one to control suction force by magnetic field. Specifically, the suction force is generated by negative pressure while the magnetic field by the hard magnetic body acts on the soft magnetic elastomer and the hard magnetic body and the soft magnetic elastomer are attracted to each other, and negative pressure is not generated and the suction force disappears while the effect of magnetic field of the hard magnetic body on the soft magnetic elastomer is not enough so that the elastic restoring force of the soft magnetic elastomer exceeds the effect or magnetic field disappears.

In the suction device 1A according to this embodiment, the suction disc deforming element 30 is the electromagnet 31. In this case, as described above, the suction force of the suction disc 10 can be easily controlled through ON/OFF control of the power source 40 of the electromagnet 31. Further, the ON/OFF control of the power source 40, which is an operation that does not directly act on the suction disc 10 and can be performed remotely from the suction disc 10, allows suction and detachment of the suction disc 10 to be controlled.

In the suction device 1A according to this embodiment, the suction disc deforming element 30 can be a so-called magnet. Examples of the magnet include a permanent magnet, in addition to the electromagnet 31. In this case, it is preferable that the suction disc deforming element 30 is movable relative to the suction disc 10.

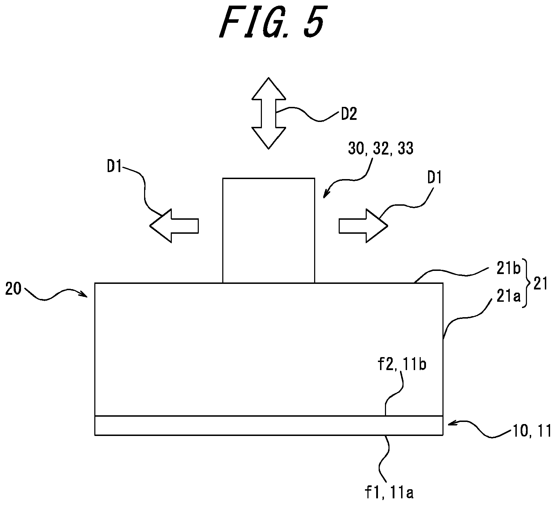

FIG. 5 is a side view schematically illustrating a variation of the suction device 1A. In the following description, the parts that are substantially the same as those illustrated in FIGS. 1 to 4B will be indicated by using the same reference signs, and the description thereof will be omitted.

In the variation of the suction device 1A illustrated in FIG. 5, the suction disc deforming element 30 is a permanent magnet 32, instead of the electromagnet 31. In this example, the permanent magnet 32 is movable relative to the suction disc 10. Specifically, as illustrated by the white arrows in FIG. 5, the permanent magnet 32 can be moved with respect to the support portion 20 along at least one of the extension direction D1 and the deformation direction D2 of the suction disc 10. It is to be noted that, in this embodiment, the extension direction D1 of the suction disc 10 is a direction extending radially from the central axis O, on the surface in which the central axis O of the suction device 1A is a vertical line. Further, in this embodiment, the deformation direction D2 is an extension direction of the central axis O of the suction device 1A.

As illustrated in FIG. 5, when the permanent magnet 32 is brought close to the suction disc 10, preferably to the center of the suction disc 10, by moving the permanent magnet 32 with respect to the support portion 20 along at least one of the extension direction D1 and the deformation direction D2 of the suction disc 10, the suction disc 10 deforms toward the inside of the support portion 20 by the magnetic force F3 of the permanent magnet 32. On the other hand, when the permanent magnet 32 is separated from the suction disc 10 by moving the permanent magnet 32 with respect to the support portion 20 along at least one of the extension direction D1 and the deformation direction D2 of the suction disc 10, the suction disc 10 is restored to a flat plate shape due to effect thereon of the elastic restoring force of the elastomer constituting the suction disc 10, due to extinction of the magnetic force F3 of the permanent magnet 32. That is, in the example illustrated in FIG. 5, generation of the magnetic force F3 can be controlled by moving the permanent magnet 32 relative to the suction disc 10.

### Sucking operation

In this example, first, as with the description with FIG. 4A, the sucking surface f1 of the suction disc 10 is brought in contact with the surface to be sucked 101 of the object to be sucked 100. Next, as illustrated in FIG. 5, the permanent magnet 32 is moved relative to the partition wall 21b of the support portion 20 along at least one of the extension direction D1 and the deformation direction D2 of the suction disc 10, and is brought close to the center of the partition wall 21b of the support portion 20, as with FIG. 4A. When the permanent magnet 32 is brought close to the center of the partition wall 21b, as with the description of FIG. 4B, the effect of the magnetic force F3 generated by the permanent magnet 32 increases, and as a result, in the suction disc 10, a region R defined by the side wall open end 21e of the support portion 20 deforms toward the inside of the support portion 20. In this case, as with the description of FIG. 4B, a sealed space S1 in a negative pressure state defined by the side wall open end 21e of the support portion 20 is formed between the suction disc 10 and the object to be sucked 100. Then, the suction disc 10 is fixed to the object to be sucked 100 by differential pressure (suction force) between the pressure on the sucking surface f1 and the atmospheric pressure acting on the entire suction disc mechanism.

### Detaching operation

Contrary to the sucking operation, as illustrated in FIG. 5, in the detaching operation, the permanent magnet 32 is detached from the center of the partition wall 21b of the support portion 20, preferably from the support portion 20, along at least one of the extension direction D1 and the deformation direction D2 of the suction disc 10. As a result, the effect of the magnetic force F3 generated by the permanent magnet 32 weakens, and the elastic restoring force of the elastomer forming the suction disc 10 exceeds it, and as with the description by FIG. 4A, the suction disc 10 is restored to a flat plate state. As a result, since differential pressure (suction force) between the pressure on the sucking surface f1 and the atmospheric pressure acting on the entire suction disc mechanism is dissolved, the suction disc 10 can be detached from the object to be sucked 100.

It is to be noted, in the example of FIG. 5, movement of the permanent magnet 32 can be controlled by using various mechanisms. As a specific control method, various control methods such as hydraulic control and electric control can be used.

Further, in the suction device 1A according to this embodiment, as described above, the support portion 20 annularly supports the suction disc 10 by the side wall 21a of the cylindrical member 21. In this case, since the sucking surface f1 is formed in the closed region R, it is more likely that negative pressure due to differential pressure between the inner pressure and the atmospheric pressure formed in a space between the suction device and the object to be sucked is generated. In this manner, a decline in the suction force over time can be suppressed more effectively,

Further, in the suction device 1A according to this embodiment, the support portion 20 has an opening A1 that allows the sealed space S1 formed between the object to be sucked 100 and the suction disc 10 to be led to the outside. In this case, the air inside the sealed space S1 and the outside air can be communicated to each other. That is, in this case, since deformation and restoration of the suction disc 10 is facilitated, the object to be sucked 100 can be easily sucked to and detached from the surface to be sucked 101. As a result, responsiveness to suction and detachment is improved.

### <Suction device according to the second embodiment>

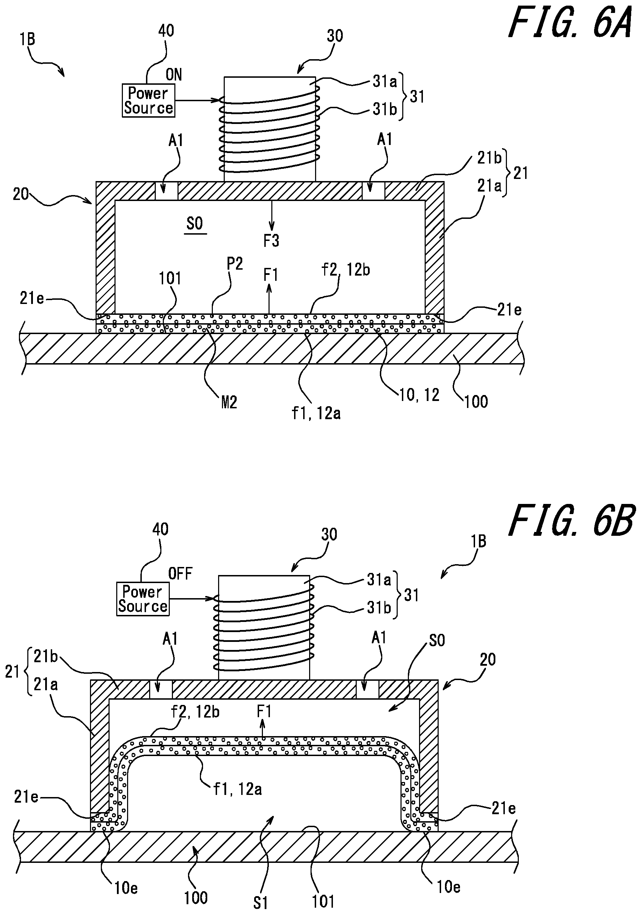

FIGS. 6A and 6B respectively illustrate a state in which a suction device 1B according to the second embodiment of the present invention is sucked to the object to be sucked 100, on a time-series basis. In the following description, the parts that are substantially the same as those illustrated in FIGS. 1 to 5 will be indicated by using the same reference signs, and the description thereof will be omitted.

In the suction device 1B according to this embodiment, the suction disc 10 is a disc member 12. The disc member 12 has an external surface 12a and an internal surface 12b, as with the suction device 1A. In this embodiment, as illustrated in FIG. 6A, the external surface 12a of the disc member 12 is a flat surface. Further, in this embodiment, as illustrated in FIG. 6A, the internal surface 12b of the disc member 12 is also a flat surface. In this embodiment, the external surface 12a of the disc member 12 forms a sucking surface f1 of the suction disc 10. Further, in this embodiment, the internal surface 12b of the disc member 12 forms an attracting surface f2 of the suction disc 10.

In the suction device 1B according to this embodiment, the disc member 12 is formed of a hard magnetic elastomer that is deformable by magnetic force. The hard magnetic elastomer has a large coercivity, spontaneous magnetization, and a property of generating magnetic force (or magnetic field) by itself. In this embodiment, the disc member 12 has different polarities (opposite polarities) on the external surface 12a and the internal surface 12b. Specifically, when the external surface 12a of the disc member 12 is the north pole, the internal surface 12b of the disc member 12 is the south pole, or when the external surface 12a of the disc member 12 is the south pole, the internal surface 12b of the disc member 12 is the north pole. That is, in this embodiment, when the sucking surface f1 of the suction disc 10 is the south pole, the attracting surface f2 of the suction disc 10 is the north pole, or, in this embodiment, when the sucking surface f1 of the suction disc 10 is the north pole, the attracting surface f2 of the suction disc 10 is the south pole. Specific examples of the hard magnetic elastomer include silicon elastomer containing magnetized neodymium alloy powder. Further, examples of the hard magnetic elastomer include, for example, those containing hard magnetic particles P2 and dispersion medium M2 and having been magnetized in advance.

### (Hard magnetic particle)

The hard magnetic particle P2 is a particle having hard magnetism. Examples of the hard magnetic body forming the hard magnetic particle P2 include, for example, magnets such as cobalt, ferrite, neodymium alloy, and the like. The hard magnetic elastomer contains a plurality of hard magnetic particles P2. The hard magnetic particle P2 contained in the hard magnetic elastomer may be the same kind of hard magnetic body or two or more different kinds of hard magnetic bodies. Further, the size of the hard magnetic particle P2 can be selected as appropriate according to the shape and the size of the suction disc 10, properties of dispersion medium M2, elastic force required for the suction disc 10, suction force (required negative pressure) required for the suction disc 10, etc. The average particle size of the hard magnetic particle P2 contained in the soft magnetic elastomer may be the same or different. The average particle size of the hard magnetic particle P2 is, for example, an average particle size in the range of 0.03 to 50 µm, preferably of 0.1 to 10 µm. When the average particle size of the hard magnetic particle P2 exceeds 50 µm, it is less likely that a uniform elastomer is obtained. Further, when the average particle size of the hard magnetic particle P2 is less than 0.03 µm, it is less likely that a sufficient deformation of the elastomer by magnetic field is obtained.

### (Dispersion medium)

The dispersion medium M2 is a medium in which the hard magnetic particles P2 are dispersed. Examples of the dispersion medium M2 include those in which hard magnetic particles P2 are dispersed and gelled. Examples of such dispersion medium include those containing silicon resin, urethane resin, fluororesin, acrylic resin, polyester resin, urea resin and the like. These resins may be combined for use. The dispersion medium M2 can be selected as appropriate according to the shape and the size of the suction disc 10, the properties of hard magnetic particle P2, the elastic force required for the suction disc 10, the suction force (required negative pressure) required for the suction disc 10, or the like. Furthermore, the proportion of the hard magnetic particle P2 to the dispersion medium M2 (concentration of the hard magnetic particle P2) can also be selected as appropriate according to the shape and the size of the suction disc 10, the properties of the hard magnetic particle P2, the elastic force required for the suction disc 10, the suction force (required negative pressure) required for the suction disc 10, or the like. The concentration of the hard magnetic particle P2 is, for example, in the range of 25 to 95% by weight, preferably in the range of 35 to 80% by weight. When the concentration of the hard magnetic particle P2 is less than 25% by weight, it is less likely that sufficient deformation of elastomer in the presence of magnetic field is obtained. Further, when the concentration of the hard magnetic particle P2 exceeds 95% by weight, it is less likely that the hard magnetic particles P2 are uniformly dispersed in the dispersion medium M2 or that the restoring force of the suction disc 10 is obtained.

### (Basic operation of the suction device 1B)

Next, the basic operation for fixing the suction device 1B according to this embodiment to the object to be sucked 100 will be described with reference to FIGS. 6A and 6B. The same reference signs are used for those described in FIGS. 1 to 4B, and descriptions thereof will be omitted.

In the suction device 1B according to this embodiment, the electromagnet 31 generates magnetic force F3 to the suction disc 10 by supplying a current to the energizing coil 31b when the power source 40 is turned on, and. Specifically, when the attracting surface f2 of the suction disc 10 is the north pole, the electromagnet 31 generates magnetic force F3 of the north pole to the attracting surface f2 of the suction disc 10 when the power source 40 is turned on, or when the attracting surface f2 of the suction disc 10 is the south pole, the electromagnet 31 generates magnetic force F3 of the south pole to the attracting surface f2 of the suction disc 10 when the power source 40 is turned on. Further, when the power source 40 is turned off, the electromagnet 31 extinguishes magnetic force F3 by stopping supplying current to the energizing coil 31b. In this embodiment, although the magnetic force F3 generated by the electromagnet 31 disappears when the power source 40 is turned off, the suction disc 10 deforms toward the magnetic element 31a of the electromagnet 31 (the side of the space S0 of the support portion 20) by its own magnetic force F1. Further, in this embodiment, when the power source 40 is turned on, the suction disc 10 is restored to a flat plate shape when the magnetic force F3 generated by the electromagnet 31 will be opposite magnetic force of the magnetic force F1 generated by the suction disc 10.

### Sucking operation

As illustrated in FIG. 6A, when the power source 40 is turned on, the suction device 1B according to this embodiment can bring the sucking surface f1 of the suction disc 10 in contact with the surface to be sucked 101 of the object to be sucked 100 when the magnetic force F3 generated by the electromagnet 31 will be opposite magnetic force of the magnetic force F1 generated by the suction disc 10. Next, when the power source 40 is turned off, the magnetic force F3 generated by the electromagnet 31 disappears, and as illustrated in FIG. 6B, in the suction disc 10, a region R defined by the side wall open end 21e of the support portion 20 deforms toward the inside of the support portion 20 by the magnetic force F1 generated by the suction disc 10. In this case, a sealed space S1 in a negative pressure state defined by the side wall open end 21e of the support portion 20 is formed between the suction disc 10 and the object to be sucked 100. As a result, the suction disc 10 is fixed to the object to be sucked 100 by differential pressure (suction force) between the pressure on the sucking surface f1 and the atmospheric pressure. Furthermore, the magnetic force F3 for further increasing the magnetic force F1 can be generated by turning on the power source 40.

### Detaching operation

Contrary to the sucking operation, in the state illustrated in FIG. 6B, when the power source 40 is turned on, the magnetic force F3 generated by the electromagnet 31 will be opposite magnetic force of the magnetic force F1 generated by the suction disc 10. As a result, as illustrated in FIG. 6A, the suction disc 10 is restored to a flat-plate state. In this manner, since differential pressure (suction force) between the pressure on the sucking surface f1 and the pressure on the attracting surface f2 is dissolved, the suction disc 10 can be detached from the object to be sucked 100.

According to the suction device 1B of this embodiment, after the sucking surface flof the suction disc 10 is brought in contact with the surface to be sucked 101 of the object to be sucked 100, the suction disc 10 can be pulled and deformed away from the object to be sucked 100 by the magnetic force F1 generated by the suction disc 10. In this manner, according to this embodiment, negative pressure is generated between the suction disc 10 and the object to be sucked 100, and suction force can be generated by the negative pressure. In this case, as long as the suction disc 10 generates the magnetic force Fl, a decline of the suction force generated by negative pressure over time is suppressed.

Therefore, according to the suction device 1B of this embodiment, when the elastomer is deformed by the magnetic force, suction force is generated by negative pressure due to differential pressure between inner pressure formed in a space between the suction device and the object to be sucked and atmospheric pressure. That is, according to the suction device of the present invention, suction force that can be controlled by the strength of the effect of the magnetic field can be obtained, in which high suction force is exerted while the effect of the magnetic field is strong enough, suction force decreases or disappears when the effect of the magnetic field is weak so that the elastic restoring force of the elastomer exceeds the effect, or the suction force disappears when the magnetic force disappears.

Further, as with the suction device 1B according to this embodiment, when the suction disc 10 is a hard magnetic elastomer, the suction disc deforming element 30 can also be a hard magnetic body. In this case, the combination of the hard magnetic elastomer and the hard magnetic body allows one to control suction force by the magnetic field. Specifically, the suction force is generated by negative pressure while the hard magnetic elastomer and the hard magnetic body are attracted to each other by the effect of the magnetic field, and negative pressure is not generated while the hard magnetic elastomer and the hard magnetic body repel each other and suction force disappears.

Further, as for the suction device 1B according to this embodiment, the suction disc deforming element 30 is the electromagnet 31. In this case, as described above, the suction force of the suction disc 10 is easily controlled by a current applied to the electromagnet 31 through ON/OFF control of the power source 40 of the electromagnet 31 in the forward and reverse directions. As a result, suction and detachment of the suction disc 10 to the object to be sucked can be controlled easily and with a high responsiveness. It is to be noted that, in this embodiment, the direction of the current supplied from the power source 40 to the electromagnet 31 can be controlled in the opposite direction. In this case, for example, during the suction operation, if the direction of the current supplied to the energizing coil 31b of the electromagnet 31 is changed without turning off the power source 40 after the suction disc 10 is brought into contact with the object to be sucked 100, the suction disc 10 can be deformed further toward the inside of the support portion 20 by the magnetic force F1 generated by the suction disc 10 and the magnetic force F3 generated by the electromagnet 31. In this manner, suction and detachment of the suction disc 10 can be controlled with a high responsiveness through ON/OFF control of the power source 40 and control of the direction of the current supplied from the power source 40 to the electromagnet 31.

Further, in the suction device 1B according to this embodiment, the suction disc deforming element 30 can be the permanent magnet 32. Specifically, when the attracting surface f2 of the suction disc 10 is the north pole, as the permanent magnet 32, a magnet that generates magnetic force F3 of the south pole on the attracting surface f2 of the suction disc 10 is used, or when the attracting surface f2 of the suction disc 10 is the south pole, as the permanent magnet 32, a magnet that generates magnetic force F3 of the north pole on the attracting surface f2 of the suction disc 10 is used. In these cases, as described in FIG. 5, the permanent magnet 32 is movable relative to the suction disc 10. In this manner, when the permanent magnet 32 is separated from the suction disc 10 formed of the hard magnetic elastomer, the suction operation can be performed. Further, when the permanent magnet 32 is brought close to the suction disc 10 formed of the hard magnetic elastomer, the detachment operation can be performed. Further, the suction/detachment operation of the suction disc in which the directions of the north/south poles of the permanent magnet are reversed is also possible.

Moreover, in the suction device 1B according to this embodiment, the suction disc deforming element 30 can be a soft magnetic body 33. In this case as well, the soft magnetic body 33 is movable relative to the suction disc 10, as with the description of FIG.5. Thus, when the soft magnetic body 33 is brought close to the suction disc 10, the suction operation of the suction disc 10 formed of a hard magnetic elastomer can be performed. Further, when the soft magnetic body 33 is separated from the suction disc 10 formed of a hard magnetic elastomer, the detachment operation can be performed.

When the suction disc 10 is formed of a hard magnetic elastomer, if the suction disc deforming element 30 is the soft magnetic body 33, suction force that can be controlled by the magnetic field can be obtained, in which, the combination of the hard magnetic elastomer and the soft magnetic body allows one to generate suction force by negative pressure while the hard magnetic elastomer and the soft magnetic body are attracted to each other by the effect of the magnetic field, and negative pressure is not generated while the effect of the magnetic field is not enough, and suction force disappears.

Although the sucking surface f1 of the suction disc 10 has been described as a flat surface in the above described each embodiment, it is preferable that the sucking surface f1 of the suction disc 10 has a protrusion or a recess. If a protrusion or a recess is formed on the sucking surface f1 of the suction disc 10, a sealed space S1 can be easily formed between the suction disc 10 and the object to be sucked 100, and as a result larger suction force can be obtained. The number of protrusions and recesses may be one for each or more, and the surface may have both protrusion and recess.

This is because, when the sucking surface f1 of the suction disc 10 has a flat shape, for example, the suction area with respect to the object to be sucked 100 will be increased, and the interaction force between the suction disc and the object to be sucked is increased. As a result, larger magnetic force will be required for detaching the sucking surface f1. On the other hand, when a protrusion or a recess is provided on the sucking surface f1 of the suction disc 10, the suction area is decreased, and thus the interaction force between the suction disc and the object to be sucked is decreased. As a result, it is not required to pull the suction disc 10 strongly to put the sealed space S1 in a negative pressure state through pulling deformation of the suction disc 10. Therefore, if a protrusion or a recess is formed on the sucking surface f1 of the suction disc 10, a sealed space S1 in a negative pressure state can be easily formed between the suction disc 10 and the object to be sucked 100.

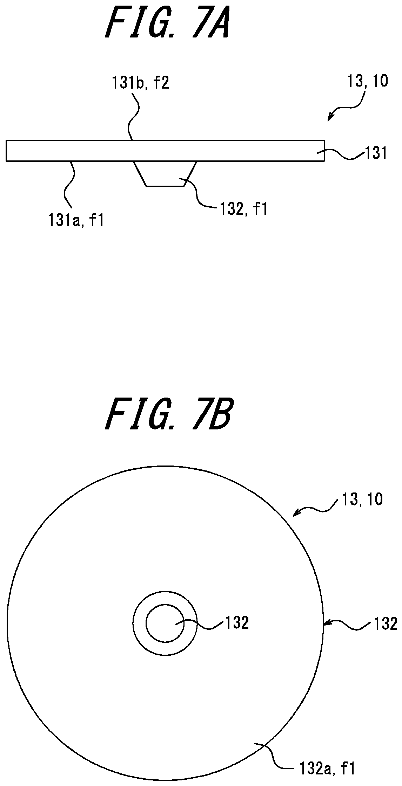

Here, FIG. 7A is a side view schematically illustrating the suction disc 13 according to an embodiment of the present invention, and FIG. 7B is a bottom view schematically illustrating the suction disc 13. In the following description, the parts that are substantially the same as those illustrated in FIGS. 1 to 6 will be indicated by using the same reference signs, and the description thereof will be omitted.

The suction disc 13 according to this embodiment is plate-shaped, and the sucking surface f1 thereof has at least one of a protrusion and a recess.

As illustrated in FIGS. 7A and 7B, the suction disc 13 according to this embodiment has a disc portion 131 and a protrusion 132. As illustrated in FIG. 7A, in this embodiment, the disc portion 131 has an external surface 131a and an internal surface 131b. In this embodiment, as illustrated in FIG. 7A, the external surface 131a of the disc portion 131 is a flat surface except for the protrusion. Further, in this embodiment, as illustrated in FIG. 7A, the internal surface 131b of the disc portion 131 is also a flat surface. In this embodiment, the protrusion 132 is provided on the external surface 131a of the disc portion 131. In this embodiment, as illustrated in FIG. 7B, the protrusion 132 is provided at the center of the disc portion 131 in a bottom view. In this embodiment, the external surface 131a of the disc portion 131 forms the sucking surface f1 of the suction disc 13 with the protrusion 132. Further, in this embodiment, the internal surface 131b of the disc portion 131 forms the attracting surface f2 of the suction disc 13.

### (Basic operation of the suction disc 13)

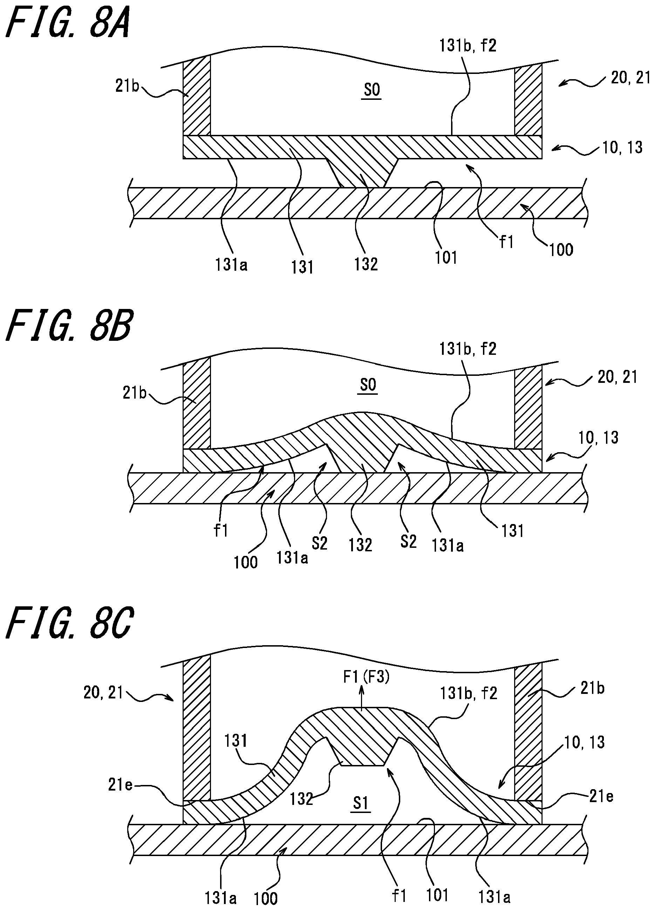

FIGS. 8A to 8C respectively illustrate a state in which the suction disc 13 is sucked to the object to be sucked 100, on a time-series basis. The same reference signs are used for those described in FIGS. 1 to 6 and the description thereof will be omitted.

As illustrated in FIG. 8A, in the suction disc 13 according to this embodiment, the protrusion 132 originally projects from the flat disc portion 131. Thus, when the suction disc 13 is pushed against the object to be sucked 100, as illustrated in FIG. 8A, the protrusion 132 of the suction disc 13 comes in contact with the surface to be sucked 101 of the object to be sucked 100, first. Next, when the suction disc 13 is further pushed, as illustrated in FIG. 8B, the disc portion 131 of the suction disc 13 deforms inward of the support portion 20 centering on the protrusion 132. As a result, a gap space S2 defined in a sealed state by the disc portion 131 together with the protrusion 132 is formed around the protrusion 132, between the suction disc 13 and the object to be sucked 100. In this manner, compared with the case where the entire surface is flat, the contact area for the object to be sucked is reduced. At this time, when the suction disc 13 is pulled and deformed toward the inside of the support portion 20 by the magnetic force, the gap space S2 increases. Due to this increased gap space S2, as illustrated in FIG. 8C, a sealed space S1 in a negative pressure state defined by the side wall open end 21e of the support portion 20 is formed between the suction disc 13 and the object to be sucked 100. In this case, the inside of the sealed space S1 is in a higher negative pressure state, which allows the suction disc 13 to generate higher suction force than, for example, the case in which the sucking surface f1 of the suction disc 10 is a flat surface.

As described above, according to the suction disc 13 of this embodiment, since the sucking surface f1 of the flat disc portion 131 has the protrusion 132, it is likely that the elastomer deforms with less magnetic force, and that negative pressure due to differential pressure between the inner pressure in a space between the suction disc and the object to be sucked and the atmospheric pressure is generated. As a result, a decline of the suction force that can be controlled by the presence/absence or the magnitude of the magnetic field over time is suppressed, and a sustainable suction force can be obtained more effectively. Further, the suction disc 13 according to this embodiment can be integrally molded with the disc portion 131 and the protrusion 132 by mold such as injection molding. Thus, according to the suction disc 13 of this embodiment, an easy-to-manufacture suction disc with a simple configuration can be obtained. In particular, in the case of a configuration in which one protrusion 132 is disposed at the center of the external surface 131a of the disc portion 131 as in this embodiment, the gate marks formed during the injection molding can be used as they are as the protrusion 132. Thus, in this case, the suction disc 13 can be formed more easily. Further, according to this embodiment, as described above, the suction disc 13 may have at least one of a recess and a protrusion on the sucking surface f1 of the plate-shaped disc portion 131. Further, the suction disc 13 may have at least a portion formed of an elastomer that is deformable by the magnetic force, as with the suction disc 10.

The suction disc 13 according to this embodiment may be formed of either a soft magnetic elastomer or a hard magnetic elastomer. The suction disc 13 according to this embodiment can be employed as the suction disc 10 of the suction device 1A and the suction device 1B according to the above described each embodiment and a variation thereof, and the like. In this case, a decline in the suction force over time due to negative pressure can be suppressed, and highly sustainable suction force can be obtained more effectively. Further, suction and detachment of the suction disc 10 can be controlled with a high responsiveness.

Further, as the support portion 20 of the suction device according to the present invention, various forms can be used.

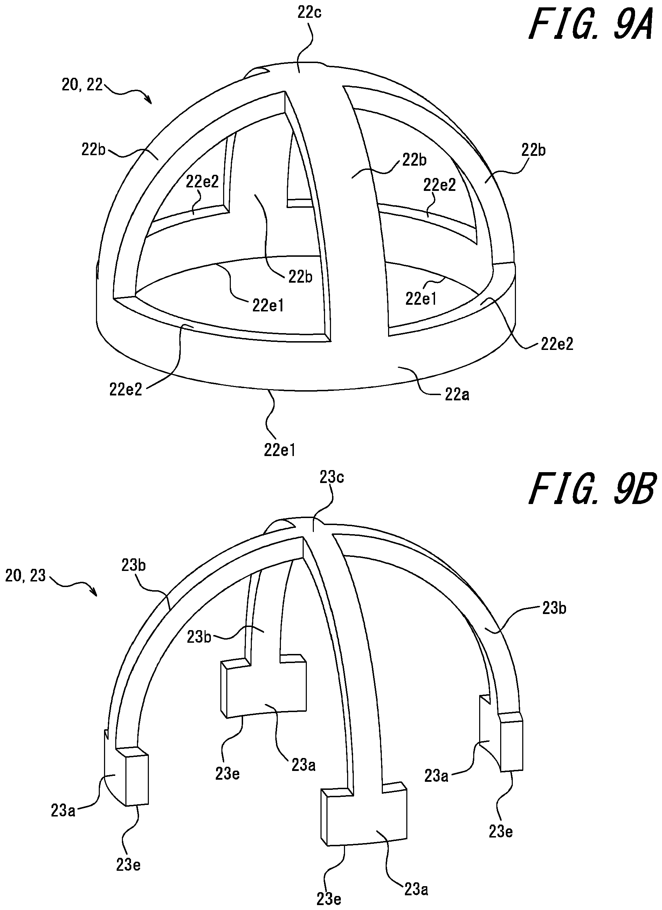

FIG. 9A is a perspective view schematically illustrating an example of the support portion applicable to the suction device according to the present invention, viewed from the plane side, and FIG. 9B is a perspective view schematically illustrating another example of the support portion applicable to the suction device according to the present invention, viewed from the plane side.

The support portion 20 illustrated in FIG. 9A is formed of a cage-shaped member 22. The cage-shaped member 22 has an annular frame 22a and a plurality of gauges 22b. One end 22e1 of the gauge 22b forms an open end of the support portion 20. In this embodiment, the suction disc 10 is fixed to one end 22e1 of the gauge 22b. The other end 22e2 of the gauge 22b is connected to the frame 22a. The gauges 22b are disposed at intervals in the circumferential direction of the frame 22a. In this embodiment, the cage-shaped member 22 exhibits a dome-shaped appearance due to the gauges 22b. In this embodiment, the suction disc deforming element 30 is disposed at the connecting portion 22c of the gauges 22b.

The support portion 20 illustrated in FIG. 9B is formed of a radial member 23. The radial member 23 is a variation of the cage-shaped member 22. In this embodiment, the radial member 23 divides the frame 22a of the radial member 23 in the circumferential direction. In this embodiment, the radial member 23 has fixed portions 23a obtained by dividing the frame 22a in the circumferential direction, and a plurality of gauges 23b corresponding to the gauges 22b. In this embodiment, the suction disc 10 is fixed to the end 23e of the fixing portion 23a. Further, in this embodiment, as with the cage-shaped member 22, the radial member 23 exhibits a dome-shaped appearance due to the gauges 23b. In this embodiment, the suction disc deforming element 30 is disposed at the connecting portion 23c of the gauge 23b.

Furthermore, various shapes of appearance can be adopted for the support portion 20.

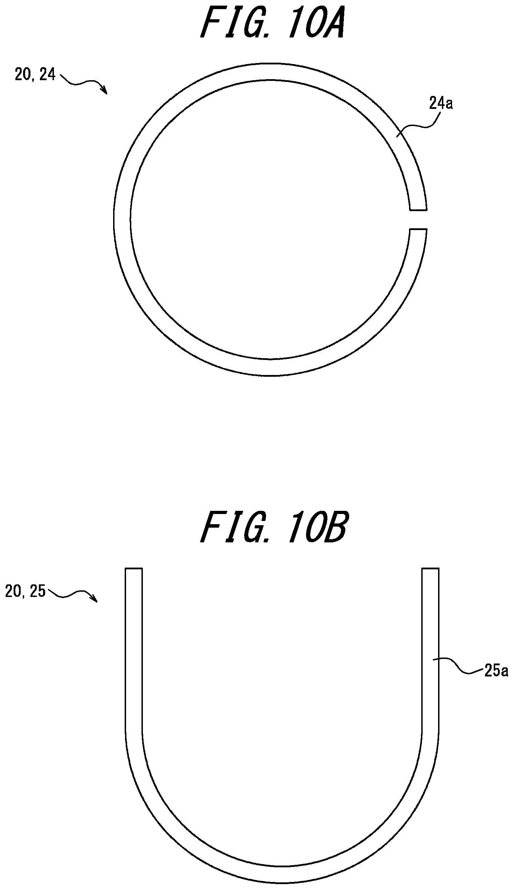

FIG. 10A is a plan view schematically illustrating an example of an external shape of the support portion 20 applicable to the suction device according to the present invention, and FIG. 10B is a plan view schematically illustrating another example of an external shape of the support portion applicable to the suction device according to the present invention.

FIG. 10A illustrates an external shape of the support portion 24, which is an example of the support portion 20. As illustrated in FIG. 10A, in a plan view of the external shape of the support portion 24, a part of the side wall 21a of the cylindrical member 21 in an annular shape is discontinued. FIG. 10B illustrates an external shape of the support portion 25, which is another example of the support portion 20. As illustrated in FIG. 10B, in a plan view of the external shape of the support portion 25, the side wall of the cylindrical member 21 is horseshoe-shaped.

In the above, some embodiments of the present invention has only been described, and various modifications can be made according to the claims. The various configurations adopted in each of the above-described embodiments can be used in combination with each other. Further, the various configurations adopted in each of the above-described embodiments can be appropriately replaced with each other.

### INDUSTRIAL APPLICABILITY

The present invention can be used, for example, as a device for detachably fixing an object such as a fastener for indoor items, an industrial robot, a self-supporting walking robot, and a work machine.

### REFERENCE SIGNS LIST

- 1A: Suction device (First embodiment)
- 1B: Suction device (Second embodiment)
- 10: Suction disc
- 11: Disc member (Soft magnetic elastomer)
- 11a: External surface of disc member
- 11b: Internal surface of disc member
- 12: Disc member (Hard magnetic elastomer)
- 13: Suction disc
- 131: Disc portion
- 132: Protrusion
- 20: Support portion
- 21: Cylindrical member
- 21a: Side wall
- 21b: Partition wall
- 22: Cage-shaped member
- 22a: Frame
- 22b: Gauge
- 22c: Connecting portion
- 23: Radial member
- 23a: Fixing portion
- 23b: Gauge
- 23c: Connecting portion
- 24: Support portion
- 25: Support portion
- 30: Suction disc deforming element
- 31: Electromagnet
- 31a: Magnetic element
- 31b: Energizing coil
- 32: Magnetic body
- A1: Opening
- f1: Sucking surface of suction disc
- f2: Attracting surface of suction disc
- F1: Magnetic force generated by suction disc
- F3: Magnetic force generated by suction disc deforming element
- S0: Space of support portion
- S1: Sealed space (in a negative pressure state)
- S2: Gap space

## Claims

1. A suction device, comprising:
a suction disc having a portion formed of an elastomer that is deformable by magnetic force;
a support portion configured to support the suction disc such that the suction disc can be deformed; and
a suction disc deforming element configured to deform the elastomer by magnetic force.

2. The suction device according to claim 1, wherein
the elastomer is a soft magnetic elastomer; and
the suction disc deforming element is a hard magnetic body.

3. The suction device according to claim 1, wherein
the elastomer is a hard magnetic elastomer; and
the suction disc deforming element is a hard magnetic body.

4. The suction device according to claim 2 or 3, wherein the hard magnetic body is an electromagnet.

5. The suction device according to claim 1, wherein
the elastomer is a hard magnetic elastomer; and
the suction disc deforming element is a soft magnetic body.

6. The suction device according to any one of claims 1 to 5, wherein the suction disc deforming element is movable relative to the suction disc.

7. The suction device according to any one of claims 1 to 6, wherein the suction disc has a plate shape, and a sucking surface of the suction disc has at least one of a recess and a protrusion.

8. The suction device according to any one of claims 1 to 7, wherein the support portion annularly supports the suction disc, in a plan view.

9. The suction device according to claim 8, wherein the support portion has an opening that allows a space formed between the support portion and the suction disc to be led to outside.

10. A suction disc that has a portion formed of an elastomer that is deformable by magnetic force, has a plate shape, and has at least one of a recess and a protrusion on a sucking surface.
